Europäisches Patentamt

European Patent Office

Office européen des brevets

(11) Veröffentlichungsnummer: **0 048 793**
**B1**

(12) **EUROPÄISCHE PATENTSCHRIFT**

(19)

(12)

(45) Veröffentlichungstag der Patentschrift:
25.09.85

(21) Anmeldenummer: 81104292.8

(22) Anmeldetag: 04.06.81

(51) Int. Cl.⁴: **H 01 H 83/12**, H 02 H 3/24,
H 02 H 11/00

(54) Anlaufsperre nach Stromausfall bei elektrischen Geräten.

(30) Priorität: 25.09.80 DE 3036133

(43) Veröffentlichungstag der Anmeldung:
07.04.82 Patentblatt 82/14

(45) Bekanntmachung des Hinweises auf die Patenterteilung:
25.09.85 Patentblatt 85/39

(84) Benannte Vertragsstaaten:
CH DE FR GB LI

(56) Entgegenhaltungen:
DE - A - 2 656 915
DE - A - 2 720 503
DE - U - 7 800 032
US - A - 3 651 391
US - A - 3 809 965

ELEKTRONIK-INFORMATIONEN, Band 7, Nr. 2, 1975
K.D. NUTZ "Integrierte Ansteuerschaltungen für
Thyristoren und Triacs" Seiten 34, 36

(73) Patentinhaber: ROBERT BOSCH GMBH, Postfach 50,
D-7000 Stuttgart 1 (DE)

(72) Erfinder: Hornung, Friedrich Dipl.-Ing.,, Am
Ochsenwald 10A, D-7000 Stuttgart 80 (DE)
Erfinder: Kuhlmann, Gerhard, Hohewartstrasse 74,
D-7000 Stuttgart 30 (DE)
Erfinder: Wahl, Günter, im Waldle 37,
D-7022 Leinfelden-Echterdingen 1 (DE)

## Beschreibung

Die Erfindung bezieht sich auf ein elektrisches Gerät mit einem Schalter nach dem ersten Teil der unabhängigen Ansprüche 1 und 3. Aus der DE-A1-2 656 915 ist ein Elektrowerkzeug bekannt, bei dem eine Schaltvorrichtung vorgesehen ist, die bei arretiertem Betätigungsschalter nach einer Spannungsunterbrechung und danach wiederkehrender Spannung verhindert, dass das Elektrowerkzeug selbsttätig wieder anläuft. Zu diesem Zwecke weist das Elektrowerkzeug ein Relais auf, das eine Selbsthaltevorrichtung hat. Die gezeigte Schaltungsanordnung benötigt mechanische Teile, die relativ störanfällig sind, da insbesondere Elektrowerkzeuge während ihres Betriebes starken Erschütterungen ausgesetzt sind.

Aus der DE-A1-2 720 503 ist eine elektrische Sicherheitsschaltung bekannt, bei der die Schaltungsunterbrechung durch einen Thyristor vorgenommen wird. Die Anordnung weist eine Fehlervergleichsschaltung auf und schaltet dann ab, wenn die Spannung bei einem Energieausfall kurzfristig unterbrochen ist. Die dort aufgezeigte Schaltungsanordnung ist relativ komplex aufgebaut und demzufolge teuer. Demgegenüber setzt sich die Erfindung zur Aufgabe, ein elektrisches Gerät auf einfache Art und Weise vor dem plötzlichen Anlaufen zu schützen, wenn das Gerät ausgeschaltet ist, jedoch die Stromversorgung kurzfristig unterbrochen wurde, wobei im Versorgungsstromkreis angeordnete elektronische Schaltvorrichtungen Verwendung finden sollen.

Die erfindungsgemässe Anordnung mit den kennzeichnenden Merkmalen der unabhängigen Ansprüche 1 und 3 hat demgegenüber den Vorteil, dass der üblicherweise im Versorgungsstromkreis bereits eingeschaltete Triac Verwendung finden kann, der lediglich durch eine einfache Zusatzbeschaltung die erwünschte Funktion erhält. Diese Anordnung hat den Vorteil, dass mechanische Teile vollständig entfallen und für die Schutzschaltung nur wenige zusätzliche Bauteile erforderlich sind. Das elektrische Gerät ist daher besonders einfach und preisgünstig herstellbar.

Gemäss dem ersten unabhängigen Anspruch enthält der in den Versorgungsstromkreis eingeschaltete Triac zwei Zündstromkreise, wobei der zweite Zündstromkreis einen Phasenschieber enthält, der den einmal gezündeten Triac in seinem gezündeten Zustand lässt, soweit die Stromzufuhr nicht unterbrochen wird. Ein im zweiten Zündstromkreis enthaltener Widerstand lässt sich dabei vorteilhafterweise gemäss Anspruch 2 durch eine Lampe ersetzen, so dass dadurch der Bereitschaftszustand des Gerätes angezeigt wird.

Gemäss dem unabhängigen Anspruch 3 wird der in den Versorgungsstromkreis eingeschaltete Triac durch einen handelsüblichen Ansteuerbaustein gezündet. Dadurch ist die Möglichkeit gegeben, auch weitere Funktionen in die Schaltung zu integrieren. Der Ansteuerbaustein ist beispielsweise besonders einfach und günstig von einem Tachogenerator zu steuern, wobei der Ansteuerbaustein Impulse dann nicht abgeben kann, wenn bei eingeschaltetem Gerät eine Unterbrechung der Stromzufuhr aufgetreten ist. Als Speicherglied zum Erkennen eines Stromausfalls kann hierbei ein Flip-Flop Verwendung finden. Flip-Flops haben den Vorteil, dass sie in den Ansteuerbaustein integriert werden können, so dass sich der zusätzliche Aufwand auf ein Minimum beschränkt. Eine weitere Möglichkeit besteht darin, als Glied mit speichernder Wirkung einen Thyristor zu verwenden. Ein Thyristor bietet den Vorteil der einfachen Montage und des günstigen Preises, falls das Flip-Flop nicht integriert ausgeführt ist. Ein Thyristor ist auch gegenüber Störimpulsen unempfindlicher. Zum Erzielen der gewünschten Funktion ist es besonders einfach, das Ausgangssignal des Speichergliedes und die Ausgangssignale des Drehzahlmessers über ein UND-Glied dem Ansteuerbaustein zuzuführen.

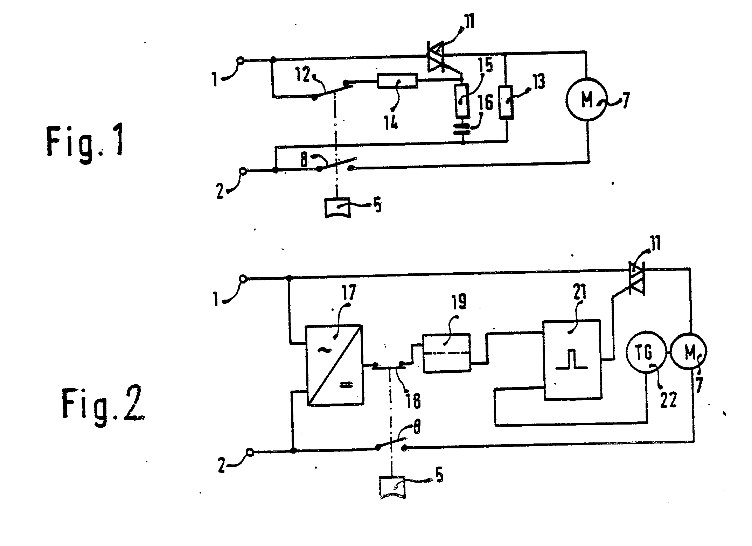

Ausführungsbeispiele der Erfindung sind in der Zeichnung dargestellt und in der nachfolgenden Beschreibung näher erläutert. Es zeigt Figur 1 eine elektrische Geräteschaltung mit einem Triac und Figur 2 eine elektrische Geräteschaltung mit einer Ansteuerschaltung und einem Flip-Flop als Speicherglied.

In Fig. 1 ist eine Schaltungsanordnung mit einem Triac dargestellt. Die Stromversorgung wird wiederum an die Klemmen 1 und 2 angeschlossen. An die Klemme 1 angeschlossen ist ein Triac 11 und ein Schaltkontakt 12, der als Ruhekontakt geschaltet ist und vom Schalter 5 betätigt wird. Der weitere Anschlusspunkt des Triacs 11 ist einerseits über den Widerstand 13 mit der Klemme 2 andererseits mit dem Motor 7 verbunden. Der Motor 7 steht wiederum über den Schaltkontakt 8, der als Arbeitskontakt geschaltet ist und vom Schalter 5 betätigt wird, mit der Klemme 2 in Verbindung. An den Schaltkontakt 12 schliesst sich ein Widerstand 14 an, der zum Zündeingang des Triacs 11 führt. An den Zündeingang des Triacs 11 ist des weiteren eine RC-Kombination mit dem Widerstand 15 und dem Kondensator 16 angeschlossen, die ihrerseits mit der Klemme 2 verbunden ist.

An die Klemmen 1 und 2 des elektrischen Gerätes wird wiederum die Stromversorgung angeschlossen. Über den im Ruhestand geschlossenen Schaltkontakt 12 und den Widerstand 14 gelangt ein Zündstrom zum Triac 11, der diesen zündet und einen Stromfluss von Klemme 1 über den Widerstand 13 zur Klemme 2 bewirkt. Wenn der Schalter in Ein-Stellung gebracht wird, würde bei jedem Null-Durchgang der angelegten Wechselspannung der Triac 11 erlöschen, da der Schaltkontakt 12 öffnet. Um dem entgegenzuwirken, ist das Phasenschieberglied mit dem Widerstand 15 und dem Kondensator 16 vorgesehen, das zusammen mit dem Widerstand 13 einen zweiten Zündstromkreis bildet. Der Kondensator 16 wird während der Netzspannungsmaxima geladen und während der Netzspannungsnulldurchgänge über die Widerstände 15 und 13 entladen. Dadurch wird bewirkt, dass die Null-Durchgänge des Zündstroms zeitlich verschoben werden, so dass der erloschene Triac sofort nach jedem Null-Durchgang der Spannung erneut gezündet wird. Der Motor 7 kann wegen des geöffneten Schaltkontaktes 8 nicht anlaufen. Ist vorgesehen, den Bereitschaftszustand des Gerätes zu signalisieren, kann vorzugsweise der Widerstand 13 leicht durch eine Anzeigelampe ersetzt werden. Die Lampe leuchtet dann, wenn der Triac 11 gezündet ist. Durch Betätigen des Schalters 5 wird der Schaltkontakt 8 geschlossen und der Schaltkontakt 12 geöffnet und der Motor läuft an. Tritt nun eine Unterbrechung in der Stromversorgung auf, so sperrt der Triac und der Strom durch den Zündstromkreis kommt zum Erliegen. Gelangt wiederum eine Spannung an die Klemmen 1 und 2, so verbleibt der Triac 11 im gesperrten Zustand, da der Schaltkontakt 12 geöffnet ist und daher der erste Zündstromkreis keinen Zündstrom über den Widerstand 14 zum Zündeingang des Triacs 11 liefert. Erst nach dem Umlegen des Schalters 5 erhält der Triac 11 Zündstrom und versetzt ihn in den leitenden Zustand. Erst jetzt kann der Motor 7 wiederum in Betrieb genommen werden. Auch diese Schaltungsanordnung kann für eine zweipolige Schaltung vorgesehen werden. Hierzu ist zwischen dem Motor 7 und dem Triac 11 nach dem Abzweig des Widerstands 13 ein Schaltkontakt vorgesehen, der als Arbeitskontakt ausgebildet ist und ebenfalls wie der Schaltkontakt 8 durch den Schalter 5 betätigt wird.

In Fig. 2 sind wiederum die Klemmen 1 und 2 mit der Stromversorgung verbunden. Die Klemme 1 führt zu einem Triac 11, der seinerseits mit dem Motor 7 verbunden ist. Über einen Schaltkontakt 8, der als Arbeitskontakt geschaltet und mit dem Schalter 5 verbunden ist, führt die Leitung vom Motor 7 zur Klemme 2. An die Klemmen 1 und 2 ist eine Gleichrichterschaltung 17 angeschlossen. Diese steht über einen Schaltkontakt 18, der als Ruhekontakt geschaltet ist und vom Schalter 5 betätigt wird, mit dem Setzeingang eines Flip-Flops 19 in Verbindung. Der Ausgang des Flip-Flops steht mit einem geeigneten Eingang eines Ansteuerbausteins 21 in Verbindung. Ein solcher Ansteuerbaustein ist als handelsübliche integrierte Schaltung erhältlich, die meist auch die Gleichrichterschaltung 17 enthält. Ein solcher Ansteuerbaustein ist beispielsweise die IS TDA 1085 A der Firma Motorola. Der Ausgang des Ansteuerbausteins 21 steht mit dem Zündimpulseingang des Triacs 11 in Verbindung. An den Motor 7 ist ein Tachogenerator 22 angeflanscht, der der Drehzahl proportionale Ausgangssignale abgibt. Der Ausgang des Tachogenerators ist an einen weiteren Eingang des Ansteuerbausteins 21 angeschlossen.

Beim Anliegen der Stromversorgung an den Klemmen 1 und 2 wird das Flip-Flop 19 durch den geschlossenen Schaltkontakt 18 gesetzt, so dass an dem Stop- oder Limit-Eingang des Ansteuerbausteins 21 ein O-Signal anliegt. Durch Betätigen des Schalters 5 wird der Schaltkontakt 8 geschlossen und der Schaltkontakt 18 geöffnet. Der Motor 7 läuft an und der Triac 11 wird von dem Ansteuerbaustein 21 so gezündet, dass nach dem Hochlaufen des Motors 7 sich eine konstante Drehzahl des Motors 7 ergibt. Eine Zündung des Triacs 11 kann jedoch nur so lange erfolgen, wie an dem Stop- oder Limit-Eingang des Ansteuerbausteins 21 ein O-Signal anliegt. Dieses O-Signal bleibt so lange erhalten, wie das Flip-Flop 19 in gesetztem Zustand verharrt. Dies ist auch dann der Fall, wenn es einmal gesetzt wurde und danach der Schaltkontakt 18 geöffnet ist. Bricht nun die Stromversorgung an den Klemmen 1 und 2 zusammen, so wird auch das Flip-Flop 19 nicht mehr mit einer Spannung versorgt. Liegt wiederum eine Spannung an den Klemmen 1 und 2 an, so verharrt das Flip-Flop 19 in seinem Ruhe-Zustand, und gibt erst wieder ein O-Signal ab, wenn es durch einen geschlossenen Schaltkontakt 18 gesetzt wird. Dies ist jedoch nur dann möglich, wenn der Schaltkontakt 8 ausgeschaltet ist. Liegt jedoch ein 1-Signal am Stop- oder Limit-Eingang an, so kann der Triac 11 durch den Ansteuerbaustein 21 nicht gezündet werden. Der Motor 7 kann also selbsttätig nicht anlaufen. Bei IS ohne Stop- oder Limit-Eingang kann das Ausgangssignal des Flip-Flops, das in diesem Fall dem nicht invertierenden Ausgang entnommen werden muss, einem UND-Glied zugeführt werden, das dem Synchronisiereingang des Ansteuerbausteins vorgesetzt wird.

Statt des Flip-Flops 19 kann auch ein Thyristor mit speichernder Wirkung verwendet werden. An den Eingang des Ansteuerbausteins ist die Anode des Thyristors und ein Widerstand vom Plus-Pol des Gleichrichters 17 anzuschliessen, während der Zündeingang des Thyristors statt des Setzeinganges des Flip-Flops angeschlossen ist. Die Kathode des Thyristors ist mit der Nulleitung des Ansteuerbausteins 21 bzw. des Gleichrichters 17 verbunden. Nach dem Zünden des Thyristors über den Schaltkontakt 18 fliesst ein konstanter Gleichstrom durch den Thyristor, so dass der Eingang des Ansteuerbausteins kurzgeschlossen ist, d.h. ein O-Signal anliegt. Tritt ein Spannungsausfall an den Klemmen 1 oder 2 auf, fliesst kein Gleichstrom mehr, der Thyristor löscht, der Kurzschluss ist aufgehoben. Ein O-Signal liegt erst wieder an, wenn der Thyristor durch Schliessen des Schaltkontakts 18 erneut gezündet wird.

Die vorbeschriebenen Schaltungen lassen sich besonders vorteilhaft und günstig bei handgeführten Elektrowerkzeugen einsetzen, um die bedienenden Personen vor einem plötzlichen und unerwarteten Anlaufen des noch eingeschalteten Gerätes zu schützen. Diese sogenannten Anlaufsperren sind jedoch für alle anderen Maschinenarten und elektrische Geräte geeignet, die durch ein unkontrolliertes Inbetriebnehmen nach einem Stromausfall entweder beschädigt werden oder Schaden verursachen können.

**Patentansprüche**

1. Elektrisches Gerät (7) mit einem Schalter (5) und mit einer Schutzschaltung, die die Stromzufuhr zum Antrieb des Gerätes (7) unterbricht, wenn die Stromversorgung des eingeschalteten Gerätes (7) ausfällt und der Schalter (5) im Zeitpunkt des Wiedereinsetzens der Stromversorgung eingeschaltet ist, dadurch gekennzeichnet, dass ein Triac (11) in den Versorgungsstromkreis eingeschaltet ist, dass der Triac (11) mit einem ersten Zündstromkreis (12, 14) und einem zweiten Zündstromkreis (13, 15, 16) beschaltet ist, wobei der erste Zündstromkreis (12, 14) mit dem Schalter (5) schaltbar ist und der zweite Zündstromkreis (13, 15, 16) einen Phasenschieber (15, 16) enthält, der den erstmals über den ersten Zündstromkreis (12, 14) gezündeten Triac (11) wiederholt zündet, wenn die Stromzufuhr nicht unterbrochen worden ist.

2. Elektrisches Gerät nach Anspruch 1, dadurch gekennzeichnet, dass ein Widerstand (13) des zweiten Zündstromkreises als Lampe ausgebildet ist.

3. Elektrisches Gerät (7) mit einem Schalter (5) und mit einer Schutzschaltung, die die Stromzufuhr zum Antrieb des Gerätes (7) unterbricht, wenn die Stromversorgung des eingeschalteten Gerätes (7) ausfällt und der Schalter (5) im Zeitpunkt des Wiedereinsetzens der Stromversorgung eingeschaltet ist, dadurch gekennzeichnet, dass ein Triac (11) in den Versorgungsstromkreis eingeschaltet ist, dass der Triac (11) mit einem Ansteuerbaustein (21) in Abhängigkeit von den Ausgangssignalen eines Drehzahlmessers (22) gezündet wird, dass ein Speicherglied (19) vorgesehen ist, das beim Einschalten des Gerätes (7) setzbar ist und durch dessen Ausgangssignal die Ausgangssignale des Drehzahlmessers (22) zum Ansteuerbaustein (21) durchschaltbar sind.

4. Elektrisches Gerät nach Anspruch 3, dadurch gekennzeichnet, dass als Speicherglied (19) ein Flip-Flop vorgesehen ist.

5. Elektrisches Gerät nach Anspruch 3, dadurch gekennzeichnet, dass als Glied mit speichernder Wirkung ein Thyristor vorgesehen ist.

6. Elektrisches Gerät nach Anspruch 3, 4 oder 5, dadurch gekennzeichnet, dass das Ausgangssignal des Speichergliedes (19) und die Ausgangssignale des Drehzahlmessers (22) über ein UND-Glied dem Ansteuerbaustein (21) zugeführt sind.

## Claims

1. Electric device (7) comprising a switch (5) and a protective circuit which interrupts the power supply for driving the device (7) if the power supply of the switched-on device (7) fails and the switch (5) is switched on at the time the power supply is restored, characterised in that a triac (11) is inserted into the supply circuit, that the triac (11) is connected to a first firing circuit (12, 14) and to a second firing circuit (13, 15, 16), the first firing circuit (12, 14) being switchable by means of the switch (5) and the second firing circuit (13, 15, 16) containing a phase-shifting circuit (15, 16) which repeatedly fires the triac (11), which is first fired via the first firing circuit (12, 14), if the power supply has not been interrupted.

2. Electric device according to Claim 1, characterised in that a resistance (13) of the second firing circuit is constructed as a lamp.

3. Electric device (7) comprising a switch (5) and a protective circuit which interrupts the power supply for driving the device (7) if the power supply of the switched-on device (7) fails and the switch (5) is switched on at the time the power supply is restored, characterised in that a triac (11) is inserted into the supply circuit, that the triac (11) is fired by means of a gating component (21) in dependence on the output signals of a revolution counter (22), that a storage element (19) is provided which can be set when the device (7) is switched on and by means of the output signal of which the output signals of the revolution counter (22) can be connected through to the gating component (21).

4. Electric device according to Claim 3, characterised in that a flip-flop is provided as the storage element (19).

5. Electric device according to Claim 3, characterised in that a thyristor is provided as the element having the storage effect.

6. Electric device according to Claim 3, 4 or 5, characterised in that the output signal of the storage element (19) and the output signals of the revolution counter (22) are supplied to the gating component (21) via an AND element.

## Revendications

1. Appareil électrique (7) avec un commutateur (5) et avec un circuit de protection qui interrompt l'arrivée du courant pour l'entraînement de l'appareil (7) lorsque l'alimentation en courant de l'appareil branché (7) est défaillante et lorsque le commutateur (5) est enclenché à l'instant du rétablissement de l'alimentation en courant, appareil électrique caractérisé en ce qu'un triac (11) est branché dans le circuit d'alimentation en courant, ce triac (11) étant connecté avec un premier circuit de courant d'allumage (12, 14) et un second circuit de courant d'allumage (13, 15, 16), le premier circuit de courant d'allumage (12, 14) étant susceptible d'être commuté avec le commutateur (5) tandis que le second circuit de courant d'allumage (13, 15, 16) comporte un déphaseur (15, 16) qui allume à nouveau le triac (11) allumé une première fois par l'intermédiaire du circuit de courant d'allumage (12, 14) et lorsque l'alimentation en courant n'a pas été interrompue.

2. Appareil électrique selon la revendication 1, caractérisé en ce qu'une résistance (13) de second circuit de courant d'allumage revêt la forme d'une lampe.

3. Appareil électrique (7) avec un commutateur (5) et un circuit de protection, qui interrompt l'arrivée du courant pour l'entraînement de l'appareil (7) lorsque l'alimentation en courant de l'appareil branché (7) est défaillante et que le commutateur (5) est branché à l'instant du rétablissement de l'alimentation en courant, appareil caractérisé en ce qu'un triac (11) est branché dans le circuit d'alimentation en courant, et que ce triac (11) est allumé par un bloc constitutif de commande (21) en fonction des signaux de sortie d'un dispositif de mesure (22) de la vitesse de rotation, un organe de mémorisation (19) étant prévu qui est susceptible d'être positionné lors de la mise en circuit de l'appareil (7), et grâce au signal de sortie duquel les signaux de sortie du dispositif de mesure de la vitesse de rotation (22) sont susceptibles d'être transmis au bloc constitutif de commande (21).

4. Appareil électrique selon la revendication 3, caractérisé en ce qu'une bascule est prévue comme organe de mémorisation (19).

5. Appareil électrique selon la revendication 3, caractérisé en ce qu'un thyristor est prévu comme organe comportant une action de mémorisation.

6. Appareil électrique selon revendications 3, 4 ou 5, caractérisé en ce que le signal de sortie de l'organe de mémorisation (19) et les signaux de sortie du dispositif de mesure de la vitesse de rotation (22) sont appliqués au bloc constitutif de commande (21) par l'intermédiaire d'une porte ET.

Fig.1

Fig.2